# EUROPEAN PATENT APPLICATION

(11) **EP 4 844 708 A1**
(43) Date of publication of application: **25.11.2026**
(21) Application number: 26179482.0
(22) Date of filing: 19.05.2026
(51) Int. Cl.: G06V 20/68, G06V 10/25, G06V 10/60, G06V 10/77, G06V 10/82, G06V 10/764, G06V 30/18

(54) **METHOD AND SYSTEM FOR OPTIMIZATION OF TEA BREWING PROFILES AND FACTORY PROCESSES USING SPECTRAL IMAGING**

(30) Priority: 21.05.2025 IN 202521049093
(71) Applicant: Tata Consultancy Services Limited, Maharashtra (IN)
(72) Inventor: JUNAGADE, Sanket Kailas, 400601 Thane, Maharashtra (IN); BOSE CHOUDHURY, Swagatam, 400601 Thane, Maharashtra (IN); SARANGI, Sanat, 400601 Thane, Maharashtra (IN); SINGH, Dineshkumar Jang Bahadur, 400601 Thane, Maharashtra (IN); PAPPULA, Srinivasu, 500081 Hyderabad, Telangana (IN)
(74) Representative: Goddar, Heinz J.

(57) **Abstract**

Traditional reliance on tea tasters introduces subjectivity and inconsistency in grading, as evaluations can vary based on individual experience, fatigue, or bias. The present disclosure acquires one or more spectral images of brewed tea sample to generate a spectral hypercube and preprocess the generated spectral hypercube to isolate one or more regions of interests. Isolated one or more regions of interests are masked by performing segmentation. Body Grade and Zing Grade and a corresponding Valuation Grade (VG) are predicted by extracting plurality of features from masked one or more regions of interests. Determined VG is validated against a baseline VG. The brewing parameters comprised in brewed tea sample are optimized using a Reinforcement Learning (RL) agent, based on validation. One or more recommendations for one or more manufacturing process adjustments are generated by comparing predicted Body Grade and predicted Zing Grade with updated Body Grade and updated Zing Grade.

## Description

### CROSS-REFERENCE TO RELATED APPLICATIONS AND PRIORITY

The present application claims priority to Indian application no. 202521049093, filed on May 21, 2025.

### TECHNICAL FIELD

The disclosure herein generally relates to optimization of tea brewing, and, more particularly, to a method and system optimization for tea brewing profiles and factory processes using spectral imaging.

### BACKGROUND

Tea is recognized as one of the most consumed aromatic beverages globally, renowned for its numerous health benefits. After harvesting, the tea leaves undergo several levels of processing and fermentation to develop their aroma and distinctive flavor. Typically, the processed tea is steeped in water, optionally accompanied by additional ingredients such as milk or sugar, to create what is known as 'made-tea'. However, the use of water at a sub-boiling temperature might not eliminate all microbes, including spores of certain bacteria. Although tea has medicinal and antimicrobial principles, it may occasionally contain microbes and are contaminated with pathogenic bacteria, yeast and molds during processing and storage, which may pose a potential health risk. As everyday millions of people drink at least one cup of tea, an overall analysis of the contamination profile of different kinds of made tea is of utmost importance and an absolute mandate. Evaluation of various made tea requires careful consideration of the color, smell, and taste of the beverage. There is speculation that the soil used for roadside tea cultivation influences the dynamics of metals from the soil to the tea plants and ultimately to tea infusion, which may be jeopardized by an environment that is becoming more unpredictable and hazardous.

Existing technologies and methods for tea quality assessment and optimization face several significant challenges. The traditional reliance on human tea tasters introduces subjectivity and inconsistency in grading, as evaluations can vary based on individual experience, fatigue, or bias. This subjectivity undermines the reliability of quality assessments, making it difficult to maintain uniform standards across batches. Manual brewing and tasting are also time-consuming and resource-intensive, requiring skilled labor and significant operational effort. Furthermore, conventional methods lack adaptability to variations in raw material characteristics, growing conditions, or processing techniques, which can lead to inconsistent results. Real-time feedback is often absent, limiting the ability to make immediate adjustments to brewing or manufacturing parameters. In the manufacturing context, there is a lack of precise guidance on how to adjust parameters like oxidation time, drying temperature, or rolling techniques to achieve specific flavor profiles. Additionally, traditional processes lack robust traceability and logging, making it challenging to monitor and replicate successful outcomes or identify sources of deviation. These limitations collectively hinder the efficiency, consistency, and scalability of tea quality assessment and optimization, necessitating a more advanced, automated, and data-driven approach.

### SUMMARY

Embodiments of the present disclosure present technological improvements as solutions to one or more of the above-mentioned technical problems recognized by the inventors in conventional systems. For example, in one embodiment, a method for optimization of tea brewing profiles and factory processes using spectral imaging is provided. The method includes collecting, a brewed tea sample from one or more sections of a production batch in a tea factory via one or more hardware processors, wherein the brewed tea sample is formulated with a liquor containing water; acquiring by a spectral camera under controlled illumination via the one or more hardware processors, one or more spectral images of the brewed tea sample, wherein the spectral camera captures the one or more spectral images over a predetermined wavelength range to generate a multi-dimensional spectral hypercube; preprocessing, via the one or more hardware processors, the generated spectral hypercube to isolate one or more regions of interests in a polygon format for subsequent spectral analysis by, downsampling the generated spectral hypercube to obtain a one-band spectral image or a three-band spectral image, wherein the one-band spectral image or the three-band spectral image is automatically selected using one or more dimension reduction algorithms for optimal contrast identification; converting the downsampled one-band spectral image or the three-band spectral image to a grayscale to reduce colour complexity and to improve intensity variations; applying a Gaussian blur on the grayscaled one-band spectral image or the three-band spectral image to smoothen random noise and soften one or more sharp edges; performing histogram equalization on the blurred one-band spectral image or the three-band spectral image to obtain improved contrast of distinguishable spectral features; and isolating the one or more regions of interests in the polygon format for subsequent spectral analysis; performing, via the one or more hardware processors, segmentation on the isolated one or more regions of interests corresponding to the brewed tea sample and wherein, a polygon mask is created on each candidate region of interests; superimposing, via the one or more hardware processors, the created polygonal mask onto the generated spectral hypercube to retain only the isolated one or more regions of interests for further analysis; extracting, via the one or more hardware processors, a plurality of features from the superimposed one or more regions of interests using a multi-band Convolutional Neural Network (CNN) classification model with a Spectral Attenuation Layer, wherein the extraction of each of the plurality of features pass leverages a spectral reflectance data corresponding to the one-band spectral image or the three-band spectral image; predicting, via the one or more hardware processors, a Body Grade and a Zing Grade based on the extracted plurality of features; determining, via the one or more hardware processors, a Valuation Grade (VG) based on the predicted Body Grade and the predicted Zing Grade; validating, via the one or more hardware processors, (i) the determined VG against a pre-defined baseline VG; and (ii) one or more brewing parameters comprised in the brewed tea sample against one or more reference brewing parameters; optimizing, via the one or more hardware processors, the one or more brewing parameters comprised in the brewed tea sample by implementing a real-time optimization loop using a Reinforcement Learning (RL) agent, based on the validation; obtaining, via the one or more hardware processors, an updated Body Grade and an updated Zing Grade, based on the optimization; creating, via the one or more hardware processors, one or more new brewing profiles based on the updated Body Grade and the updated Zing Grade; recommending, via the one or more hardware processors, the created one or more new brewing profiles to one or more tea tasters; obtaining, via the one or more hardware processors, feedback from the one or more tea tasters for refining the created one or more brewing profiles based on the recommendation; assessing, via the one or more hardware processors, a Standard operating procedure (SOP) Compliance by comparing the predicted Body Grade and the predicted Zing Grade with the updated Body Grade and the updated Zing Grade, based on the feedback; and generating, via the one or more hardware processors, one or more recommendations to one or more manufacturing process adjustments by integrating at least one of a domain knowledge module including one or more large language models (LLMs) and one or more rule-based algorithms, based on the SOP Compliance assessment.

In another aspect, there is provided a system for optimization of tea brewing profiles and factory processes using spectral imaging. The system comprises: a memory storing instructions; one or more communication interfaces; and one or more hardware processors coupled to the memory via the one or more communication interfaces, wherein the one or more hardware processors are configured by the instructions to: collect a brewed tea sample from one or more sections of a production batch in a tea factory, wherein the brewed tea sample is formulated with a liquor containing water. The system further includes acquiring by a spectral camera under controlled illumination, one or more spectral images of the brewed tea sample, wherein the spectral camera captures the one or more spectral images over a predetermined wavelength range to generate a multi-dimensional spectral hypercube; preprocessing, the generated spectral hypercube to isolate one or more regions of interests in a polygon format for subsequent spectral analysis by, downsampling the generated spectral hypercube to obtain a one-band spectral image or a three-band spectral image, wherein the one-band spectral image or the three-band spectral image is automatically selected using one or more dimension reduction algorithms for optimal contrast identification; converting the downsampled one-band spectral image or the three-band spectral image to a grayscale to reduce colour complexity and to improve intensity variations; applying a Gaussian blur on the grayscaled one-band spectral image or the three-band spectral image to smoothen random noise and soften one or more sharp edges; performing histogram equalization on the blurred one-band spectral image or the three-band spectral image to obtain improved contrast of distinguishable spectral features; and isolating the one or more regions of interests in the polygon format for subsequent spectral analysis; performing, segmentation on the isolated one or more regions of interests corresponding to the brewed tea sample and wherein, a polygon mask is created on each candidate region of interests; superimposing, the created polygonal mask onto the generated spectral hypercube to retain only the isolated one or more regions of interests for further analysis; extracting, a plurality of features from the superimposed one or more regions of interests using a multi-band Convolutional Neural Network (CNN) classification model with a Spectral Attenuation Layer, wherein the extraction of each of the plurality of features pass leverages a spectral reflectance data corresponding to the one-band spectral image or the three-band spectral image; predicting a Body Grade and a Zing Grade based on the extracted plurality of features; determining a Valuation Grade (VG) based on the predicted Body Grade and the predicted Zing Grade; validating i) the determined VG against a pre-defined baseline VG; and (ii) one or more brewing parameters comprised in the brewed tea sample against one or more reference brewing parameters; optimizing the one or more brewing parameters comprised in the brewed tea sample by implementing a real-time optimization loop using a Reinforcement Learning (RL) agent, based on the validation; obtaining an updated Body Grade and an updated Zing Grade, based on the optimization; creating one or more new brewing profiles based on the updated Body Grade and the updated Zing Grade; recommending the created one or more new brewing profiles to one or more tea tasters; obtaining feedback from the one or more tea tasters for refining the created one or more brewing profiles based on the recommendation; assessing a Standard operating procedure (SOP) Compliance by comparing the predicted Body Grade and the predicted Zing Grade with the updated Body Grade and the updated Zing Grade, based on the feedback; and generating one or more recommendations to one or more manufacturing process adjustments by integrating at least one of a domain knowledge module including one or more large language models (LLMs) and one or more rule-based algorithms, based on the SOP Compliance assessment.

In yet another aspect, there are provided one or more non-transitory machine-readable information storage mediums comprising one or more instructions which when executed by one or more hardware processors cause collecting, a brewed tea sample from one or more sections of a production batch in a tea factory, wherein the brewed tea sample is formulated with a liquor containing water; acquiring by a spectral camera under controlled illumination, one or more spectral images of the brewed tea sample, wherein the spectral camera captures the one or more spectral images over a predetermined wavelength range to generate a multi-dimensional spectral hypercube; preprocessing, the generated spectral hypercube to isolate one or more regions of interests in a polygon format for subsequent spectral analysis by, downsampling the generated spectral hypercube to obtain a one-band spectral image or a three-band spectral image, wherein the one-band spectral image or the three-band spectral image is automatically selected using one or more dimension reduction algorithms for optimal contrast identification; converting the downsampled one-band spectral image or the three-band spectral image to a grayscale to reduce colour complexity and to improve intensity variations; applying a Gaussian blur on the grayscaled one-band spectral image or the three-band spectral image to smoothen random noise and soften one or more sharp edges; performing histogram equalization on the blurred one-band spectral image or the three-band spectral image to obtain improved contrast of distinguishable spectral features; and isolating the one or more regions of interests in the polygon format for subsequent spectral analysis; performing, segmentation on the isolated one or more regions of interests corresponding to the brewed tea sample and wherein, a polygon mask is created on each candidate region of interests; superimposing, the created polygonal mask onto the generated spectral hypercube to retain only the isolated one or more regions of interests for further analysis; extracting, a plurality of features from the superimposed one or more regions of interests using a multi-band Convolutional Neural Network (CNN) classification model with a Spectral Attenuation Layer, wherein the extraction of each of the plurality of features pass leverages a spectral reflectance data corresponding to the one-band spectral image or the three-band spectral image; predicting a Body Grade and a Zing Grade based on the extracted plurality of features; determining a Valuation Grade (VG) based on the predicted Body Grade and the predicted Zing Grade; validating i) the determined VG against a pre-defined baseline VG; and (ii) one or more brewing parameters comprised in the brewed tea sample against one or more reference brewing parameters; optimizing the one or more brewing parameters comprised in the brewed tea sample by implementing a real-time optimization loop using a Reinforcement Learning (RL) agent, based on the validation; obtaining an updated Body Grade and an updated Zing Grade, based on the optimization; creating one or more new brewing profiles based on the updated Body Grade and the updated Zing Grade; recommending the created one or more new brewing profiles to one or more tea tasters; obtaining feedback from the one or more tea tasters for refining the created one or more brewing profiles based on the recommendation; assessing a Standard operating procedure (SOP) Compliance by comparing the predicted Body Grade and the predicted Zing Grade with the updated Body Grade and the updated Zing Grade, based on the feedback; and generating one or more recommendations to one or more manufacturing process adjustments by integrating at least one of a domain knowledge module including one or more large language models (LLMs) and one or more rule-based algorithms, based on the SOP Compliance assessment.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for optimization of tea brewing profiles and factory processes using spectral imaging, according to some embodiments of the present disclosure.
FIG. 2 is a functional block diagram of the system for optimization of tea brewing profiles and factory processes using spectral imaging, according to some embodiments of the present disclosure.
FIGS. 3A through 3D are flow diagrams illustrating the steps involved in the method for optimization of tea brewing profiles and factory processes using spectral imaging, according to some embodiments of the present disclosure.
FIG. 4 is a block diagram illustrating a real-time brewing parameters optimization and recommendations, in conjunction with the method for optimization of tea brewing profiles and factory processes using spectral imaging, according to some embodiments of the present disclosure.
FIG. 5 is a block diagram illustrating manufacturing factory process recommendations to achieve targeted Valuation Grade (VG), in conjunction with the method for optimization of tea brewing profiles and factory processes using spectral imaging, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

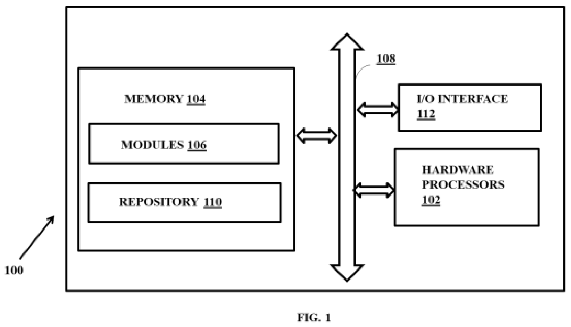

Referring now to the drawings, and more particularly to FIG. 1 through FIG. 5, where similar reference characters denote corresponding features consistently throughout the figures, there are shown preferred embodiments, and these embodiments are described in the context of the following exemplary system and/or method.

Traditional tea grading by human tasters often results in inconsistent and subjective outcomes. Manual processes are time-intensive and resource-heavy. Further, the lack of immediate feedback in conventional methods hampers quick adjustments and traditional methods offer minimal traceability.

Conventional systems struggle to adapt to variations in raw material quality or specific flavor targets. Variations in raw materials and brewing processes lead to fluctuations in quality. Further, skilled labor for tasting and manual adjustments can be resource intensive. Furthermore, the traditional methods often lack the flexibility to explore alternative brewing profiles.

Achieving target grades like Body and Zing often lacks precise guidance. Seasonal and batch-based variations frequently lead to uneven quality. Further, changes in manufacturing parameters often impact attributes like Body and Zing differently. Furthermore, robust tracking of manufacturing adjustments and their impact on quality has been a significant gap.

The present disclosure addresses the above-mentioned issues by providing a system and method for optimization of tea brewing profiles and factory processes using spectral imaging. The present disclosure provides an end-to-end automated system for brewed tea evaluation and optimization, focusing on sensory attributes such as a body and a zing. The present disclosure integrates hardware automation, spectral imaging, and machine learning techniques into a unified pipeline. The present disclosure employs Region of Interest (ROI)-based segmentation using neural networks and domain-specific preprocessing steps. The present disclosure identifies homogeneous regions within liquid samples, addressing challenges such as reflections and uneven compositions. This segmentation process overlays the ROI onto raw spectral data (spectral hypercube) to combine spatial and spectral features for analysis. Additionally, the inclusion of a spectral attenuation layer in the CNN highlights relevant spectral features for precise sensory grade predictions. The present disclosure introduces a real-time brewing optimization loop using reinforcement learning (RL). This process fine-tunes brewing parameters (e.g., infusion time, temperature, tea-to-water ratio) to achieve target sensory profiles defined by a Body Grade and a Zing Grade, wherein one or more brewing parameters are adjusted based on feedback from the CNN model. The RL algorithm uses a reward function to align sensory outputs with the target grades while maintaining stable brewing conditions. The present disclosure also creates and stores brewing profiles, enabling users to meet varying preferences or adapt to different raw materials. The ability to iteratively optimize brewing in real-time contrasts with static or offline methods, providing a flexible and reproducible approach.

The present disclosure further provides one or more recommendations for manufacturing process adjustments when sensory targets cannot be met through brewing alone. By analyzing spectral data and deviations in sensory predictions, the system offers actionable suggestions for modifying oxidation, rolling, or drying parameters. This feature establishes a feedback loop between brewing outcomes and manufacturing, helping ensure consistency and improvement throughout the production cycle.

FIG. 1 illustrates an exemplary system 100 for optimization of tea brewing profiles and factory processes using spectral imaging, according to some embodiments of the present disclosure. In an embodiment, system 100 includes or is otherwise in communication with hardware processors 102, at least one memory such as a memory 104, and an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For this purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

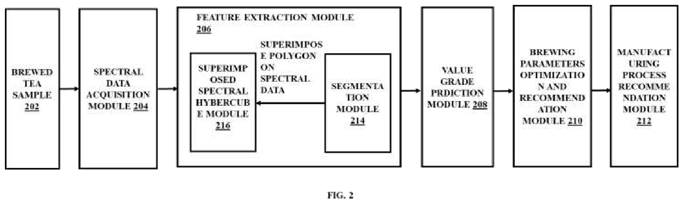

The plurality of modules 106 includes programs or coded instructions that supplement applications or functions performed by the system 100 for optimization of tea brewing profiles and factory processes using spectral imaging. The plurality of modules 106, amongst other things, can include routines, programs, objects, components, and data structures, which perform particular tasks or implement particular abstract data types. The plurality of modules 106 may also be used as signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for optimization of tea brewing profiles and factory processes using spectral imaging. In an embodiment, the modules 106 include a brewed tea sample 202, a spectral data acquisition module 204, a feature extraction module 206, a value grade prediction module 208, a brewing parameters optimization and recommendation module 210, and a manufacturing process recommendation module 212. The feature extraction module 206 includes a segmentation module 214 and a superimposed spectral hypercube module 216. The modules are depicted in FIG. 2. These modules that are depicted in FIG. 2 are implemented as at least one of a logically self-contained part of a software program, a self-contained hardware component, and/or a self-contained hardware component with a logically self-contained part of a software program embedded into each of the hardware component that when executed perform the above method described herein, in one embodiment of the present disclosure.

The data repository (or repository) 110 may include a plurality of abstracted pieces of code for refinement and data that is processed, received, or generated as a result of the execution of the module(s) 106.

Although the data repository 110 is shown internal to the system 100, it will be noted that, in alternate embodiments, the data repository 110 can also be implemented external to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

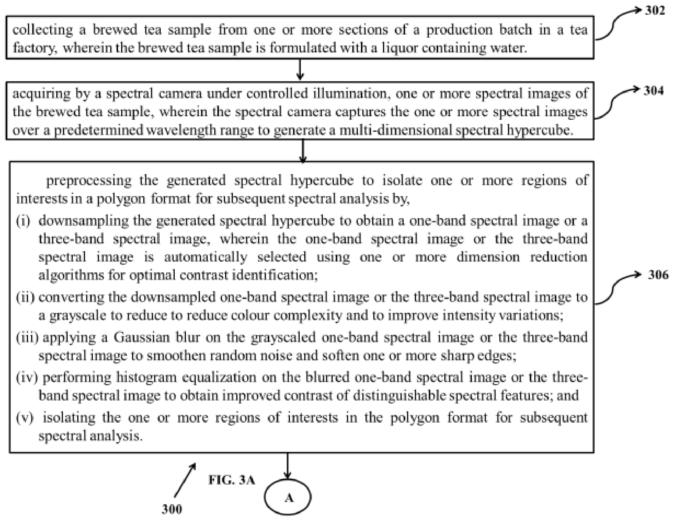

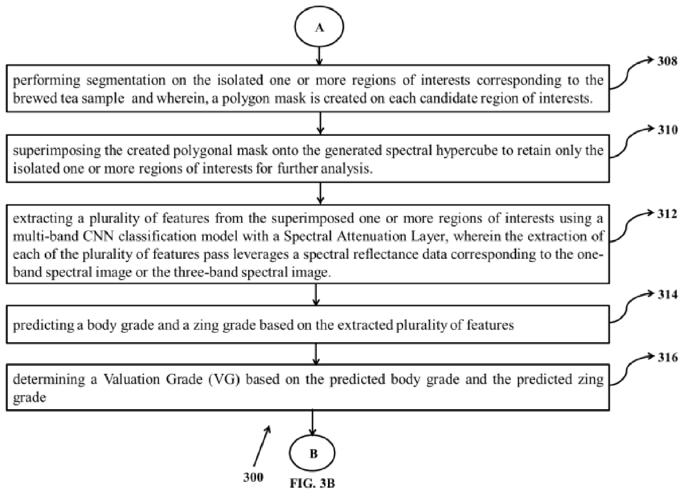

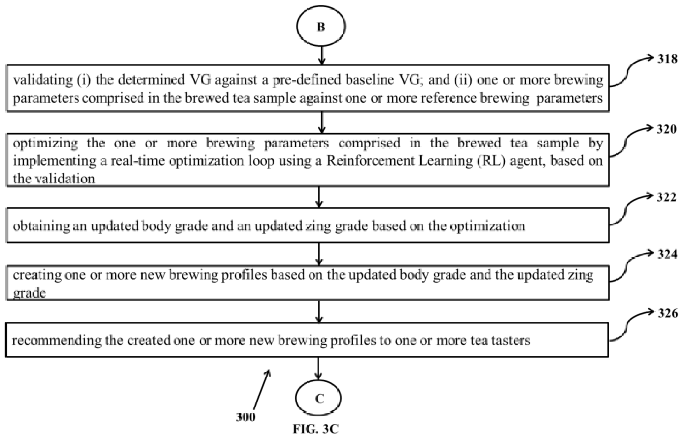

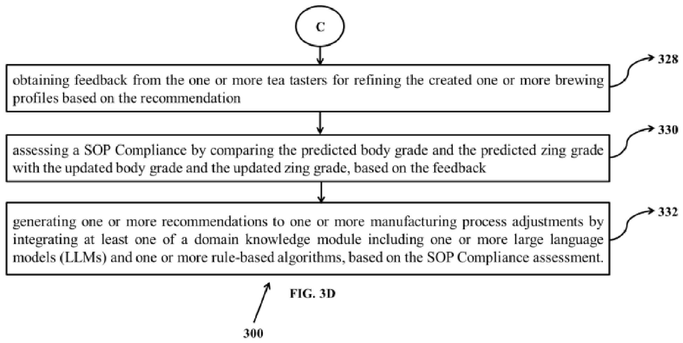

FIGS. 3A through 3D are flow diagrams illustrating a method for optimization of tea brewing profiles and factory processes using spectral imaging using the systems 100 of FIGS. 1-2, according to some embodiments of the present disclosure. Steps of the method of FIGS. 3A through 3D shall be described in conjunction with the components of FIG. 2. At step 302 of the method 300, the one or more hardware processors 102 collects a brewed tea sample (represented by the brewed tea sample 202) from one or more sections of a production batch in a tea factory. The brewed tea sample is formulated with a liquor containing water.

The system 100 operates as a closed-loop pipeline wherein each brewed tea sample initiates an integrated hardware-software control cycle. The central controller synchronizes actions across the automated brewing module, the spectral imaging unit, and the processing engine. Upon receiving a command, the brewing hardware precisely executes the infusion parameters. Once brewing is completed, the sample is automatically positioned and imaged under controlled illumination using the spectral camera. The acquired image data is immediately passed to the processing module where grade prediction and Reinforcement Learning (RL) decisions are made in real-time. Based on the outcome, the controller updates the brewing module for the next iteration. This loop continues until convergence is achieved, ensuring seamless real-time coordination across the system's physical and computational components.

The step 302 is explained in detail as below:
Hardware-Assisted Sample Handling and Preparation:
   - Brewing Sample Preparation
      • · Automated Brewing Module:
         - Measure Tea Quantity: Utilize a calibrated dispenser to measure precise tea weights.
         - Control Water Parameters:
            ∘ Volume: Precisely manage water volume (e.g., 100 mL).
            ∘ Temperature: Set water temperature accurately (e.g., 90°C).
         - Manage Infusion Timing: Accurately time the infusion process (e.g., 3 minutes).
         - Add Milk Automatically: Incorporate milk if specified by the Standard Operating Procedure (SOP).
   - Enforce SOP Parameters:
      - Tea-to-Water Ratio: Maintain 2 g tea per 100 mL water.
      - Water Temperature: Ensure water is at 90°C.
      - Infusion Time: Set infusion time to 3 minutes.
   - Sanitation & Calibration:
      - Sanitize Instruments: Regularly sanitize all brewing instruments to prevent contamination.
      - Calibrate Equipment:
         ∘ Frequency: Perform calibration checks weekly or monthly.
         ∘ Logging: Maintain standard calibration logs to track and correct any deviations.

Please note, while the brewing parameters are standardized for consistent grading, they can be adjusted based on specific tea types, (black tea, green tea, etc.) and specific board standards. (e.g., Darjeeling Tea brewed at 85°C for 2.5 minutes without milk) to highlight unique flavor profiles. The consistency in brewing parameters is crucial for accurate and comparable Valuation Grade (VG)s.

At step 304 of the method 300, the spectral data acquisition module 204 executed by the one or more hardware processors 102 acquire one or more spectral images of the brewed tea sample. The spectral camera captures the one or more spectral images over a predetermined wavelength range to generate a multi-dimensional spectral hypercube.

At step 306 of the method 300, the one or more hardware processors 102 preprocess the generated spectral hypercube to isolate one or more regions of interests in a polygon format for subsequent spectral analysis using the following steps. The generated spectral hypercube is downsampled to obtain a one-band spectral image or three-band spectral image. The one-band spectral image or the three-band spectral image is automatically selected using one or more dimension reduction algorithms for optimal contrast identification. The downsampled one-band spectral image or the three-band spectral image are converted to a grayscale to reduce colour complexity and to improve intensity variations. A Gaussian blur is applied on the grayscaled one-band spectral image or the three-band spectral image to smoothen random noise and soften one or more sharp edges. A histogram equalization is performed on the blurred one-band spectral image or the three-band spectral image to obtain improved contrast of distinguishable spectral features. The one or more regions of interests are isolated in the polygon format for subsequent spectral analysis.

Firstly, the generated spectral hypercube, which contains multiple wavelength-specific bands, is downsampled using one or more dimensionality reduction techniques including a Principal Component Analysis (PCA), a Genetic Algorithm (GA), or a domain-specific knowledge. This process selects either a single representative band (1-band image) or a composite of three key bands (3-band image) that offer the highest contrast between the tea sample and its background. These selected band(s) are then transformed into grayscale images to reduce color complexity and enhance spatial intensity variations. A Gaussian blur is applied to the grayscale images to smooth out random noise and soften sharp edges. Histogram equalization is then performed on the blurred images to further improve contrast, making spectral features more distinguishable. Using these preprocessed images, a neural segmentation model (e.g., U-Net or SAM) identifies the Region of Interest (ROI) by extracting the central, homogeneous liquid region of the brewed tea sample. This ROI is delineated as a polygonal mask that efficiently encloses the most informative area of the image while excluding irrelevant boundaries and artifacts. Subsequently, this polygonal mask is overlaid and aligned with the original full spectral hypercube, ensuring spatial consistency across all wavelength bands. This step ensures that only the identified ROI across the full hyperspectral dataset is retained for downstream spectral feature extraction and CNN-based prediction, effectively reducing noise and computational burden while preserving spectral integrity.

At step 308 of the method 300, the segmentation module 214 of the feature extraction module 206 executed by the one or more hardware processors 102 perform segmentation on the isolated one or more regions of interests corresponding to the brewed tea sample. A polygon mask is created on each candidate region of interests.

Specifically, the segmentation employs an advanced convolutional neural network (CNN) model, such as U-Net or Segment Anything Model (SAM), trained explicitly to recognize and delineate homogeneous regions representing brewed tea samples in grayscale images obtained from dimensionality reduction. Once the segmentation model identifies the candidate region(s), the polygon mask is created around each region of interest to precisely isolate the target region (one or more regions of interests) and exclude background or boundary artifacts.

At step 310 of the method 300, the superimposed spectral hypercube module 216 executed by the one or more hardware processors 102 superimpose the created polygonal mask onto the generated spectral hypercube to retain only the isolated regions of interest for further analysis. This step aligns the spatial coordinates precisely between the polygonal mask (derived from the downsampled grayscale segmentation) and the original multi-dimensional hypercube data, which ensures spatial consistency across all spectral bands. Consequently, only spectral pixels located within the polygon-defined regions of interest are retained, removing irrelevant spectral data from the background or noise areas. This significantly improves data quality and efficiency for subsequent feature extraction and grade prediction steps.

At step 312 of the method 300, the feature extraction module 206 executed by the one or more hardware processors 102 extract a plurality of features from the superimposed one or more regions of interests using a multi-band Convolutional Neural Network (CNN) classification model with a Spectral Attenuation Layer. The extraction of each of the plurality of features pass leverages a spectral reflectance data corresponding to the one-band spectral image or the three-band spectral image. The CNN model comprises multiple convolutional layers followed by pooling layers and fully connected layers, designed to extract hierarchical spatial and spectral features from the ROI-segmented spectral hypercube. The CNN model processes input data either from the original hypercube or from a reduced set of spectral bands selected using the one or more dimensionality reduction techniques. Critically, the Spectral Attenuation Layer is a learnable layer embedded early in the CNN architecture, which assigns adaptive weights to individual or grouped spectral bands. These weights are trained using labeled tea sample data to emphasize spectral regions that correlate strongly with sensory attributes such as aroma, viscosity, texture (Body), and flavor sharpness or liveliness (Zing). Spectral bands irrelevant to prediction, including those dominated by noise or reflective interference are down weighted or suppressed. This dynamic spectral filtering improves model generalization and robustness by reducing the influence of confounding spectral signals. As a result, the extracted feature vectors passed through the downstream CNN layers are richer in chemically and physically relevant information. The CNN model is trained to predict both Body and Zing Grades simultaneously or independently, depending on implementation, and significantly outperforms traditional CNN models lacking adaptive spectral weighting.

The steps 304 through step 312 are explained in detail as below:
Spectral Imaging and Data Acquisition
   · Imaging Hardware:
      · Capture Spectral Data: Use a spectral camera to capture reflectance data across a configurable wavelength range, such as 400-1000 nm, 1000-1800 nm, or the full range of 400-2500 nm, depending on the application requirements.
         - File Storage: Save each captured image in both raw format (as a spectral hypercube encompassing all wavelength bands) and JPEG format (as a downsampled image corresponding to selected bands), preserving detailed spectral information and facilitating easier processing.
      · Control Lighting and Environment:
         - Automate Lighting: Eliminate ambient light variability.
         - Standardized Environment: Ensure consistent image quality through automated controls.
      · Maintain Imaging Equipment:
         - Clean Camera Lenses and Light Sources: Implement a routine cleaning protocol.
         - Verify Lighting Consistency: Use reference materials (e.g., a white calibration tile) before each new batch of scans.
· Data Acquisition:
   · Prepare Brewed Liquor Sample:
      - Standardized Container: Place the sample in a container with consistent depth and volume.
      - Positioning: Ensure the sample is within the camera's field of view for uniform scanning.

Spatial Noise Correction and Segmentation
· Extract Spectral Bands
   · Automatically select one (jpeg image) or three (reconstruction) key spectral bands using PCA, GA or domain knowledge to provide optimal contrast for segmentation.
· Preprocess Images
   · Convert to Grayscale: Transform the selected spectral band(s) to grayscale.
   · Apply Gaussian Blur: Smooth out noise using Gaussian filtering.
   · Enhance Contrast: Perform histogram equalization to improve image contrast.
· Segment Region of Interest (ROI)
   · Utilize a specialized CNN (e.g., U-Net, SAM) to identify the central, homogeneous ROI within the brewed sample.
   · Create a polygonal mask around the ROI to isolate it from the background.
· Overlay Polygon Mask
   · Superimpose the polygonal mask onto the raw spectral images, ensuring that only the ROI across all spectral bands is utilized for subsequent analysis.

Dimensionality Reduction (Optional)
· Select relevant spectral bands
   · To optimize data processing, the system uses PCA or Genetic Algorithm (GA) to identify the top 10 or more most relevant spectral bands from the dataset. This dimensionality reduction retains essential spectral information for accurate grade prediction while minimizing computational complexity.
   · Reduce Computational Complexity
   · Retain critical spectral information necessary for accurate grade prediction while minimizing data size.

At step 314 of the method 300, the one or more hardware processors 102 predict a Body Grade and a Zing Grade based on the extracted plurality of features.

At step 316 of the method 300, the value grade prediction module 208 executed by the one or more hardware processors 102 determines a Valuation Grade (VG) based on the predicted Body Grade and the predicted Zing Grade. The VG is a composite two-digit score, where the first digit represents the predicted Body Grade, and the second digit represents the predicted Zing Grade.Body and Zing Grades:
Body (First Digit):
   Definition: Encompasses the texture and mouthfeel of the tea.
   Influencing Factors: Growing conditions, liquid strength, physical grade, and factory processing methods.
Zing (Second Digit):
   Definition: Represents the taste and physical grade of the tea, including sharpness, character, and flavor notes.
   Influencing Factors: Physical grade (one or more physical attributes) and chemical components (one or more chemical attributes) like tannins, sugars, and amino acids.
   Complex Final Valuation Grade (VG)Composition: A two-digit score combining Body and Zing Grades belongs to each digit
   Purpose: Serves as the benchmark for quality assessment and optimization within the system.

At step 318 of the method 300, the one or more hardware processors 102 validate (i) the determined VG against a pre-defined baseline VG; and (ii) one or more brewing parameters comprised in the brewed tea sample against one or more reference brewing parameters.

The step 314 through step 318 is explained in detail below:
CNN Grade Prediction (Customized CNN with Spectral Attenuation Layer)
· Define Model Architecture
   · CNN Core: Utilize for deep and robust feature extraction from image data.
   · Spectral Attenuation Layer: Emphasize relevant spectral frequencies and suppress noise, enhancing model accuracy.
   · Training: Pre-train the CNN on pre-processed historical data and enable real-time predictions based on mentioned pre-processing.
· Input Processed Data
   · Feed segmented and optionally dimensionally reduced spectral data from the brewed sample into the CNN model.
   · Generate Predictions
   · Body_Pred: Predict the "Body" grade.
   · Zing _Pred: Predict the "Zing" grade.

The Valuation Grade (VG) is used as a quantitative benchmark for evaluating the quality of the brewed tea sample. During baseline calibration under SOP-defined conditions, a reference VG is established - for instance, a factory standard for a specific tea type may expect a baseline VG.. Subsequent brewed samples are compared against this target VG to evaluate consistency. If the predicted VG deviates significantly from the target the system 100 triggers either RL-based brewing optimization or initiates manufacturing-level recommendations. The VG thus acts as both a real-time quality index and a decision control signal to drive optimization or diagnostics, depending on the nature and extent of deviation from the predefined target profile.

### Camera Parameter-Related Anomalies

1. Real-Time Data Validation
   · Verify Reflectance Values: The system continuously monitors the integrity of the acquired spectral data to ensure high-quality analysis. Spectral anomalies are detected by analyzing deviations in reflectance values from expected wavelength-specific baselines. If the reflectance of any region within the ROI significantly deviates from the statistical norm of previous batches (e.g., due to sensor drift, contamination, or foreign material), it is flagged automatically. The system also extracts metadata from each scan - including exposure time, camera gain, brightness, and contrast - from associated files (e.g., *.hdr headers) to detect inconsistencies in camera configuration that could compromise spectral accuracy.
   · Detect Defects in Samples: Visual anomalies are detected using object detection algorithms (e.g., You Only Look Once (YOLO), single Shot Detector (SSD) object detection, Faster Region-based Convolutional Neural Network (R-CNN), RetinaNet, or others) applied to single-band grayscale images to identify contamination, such as dust particles, fibers, or hardware artifacts that may be present in the brewed sample. These algorithms function by localizing and classifying visual irregularities within the image frame, using learned spatial and intensity patterns to detect foreign elements against the expected spectral background. Physical-grade anomalies, such as unusual morphology, air pockets, or color inconsistencies in the brewed liquor, are identified by comparing segmented ROI features (e.g., size, texture, contour shape, uniformity) with predefined quality thresholds and morphological standards provided by the factory or regulatory boards. This multi-stage detection pipeline ensures early identification of defective or contaminated samples before they proceed to grading or optimization steps.
   · Flag Anomalies: If any anomaly is detected, the system flags it immediately, halts the pipeline for that sample, and prevents the contaminated or corrupted data from influencing machine learning predictions.
2. Establish System Logging and Traceability
   To ensure full operational transparency, the system implements structured logging of all critical events:
   - Time-Stamped Entries: Record key events such as brewing cycles, spectral acquisitions, anomaly detection events, reinforcement learning (RL) actions, and recommended factory adjustments with accurate timestamps. This creates a chronological record for traceability.
   - Accessibility: Ensure that all logs are easily accessible to support regulatory compliance and facilitate quality audits. This improves transparency and aids in maintaining consistent operational standards.

Output of Feature 1 of the present disclosure (Spectral Image Processing & Valuation Grade (VG) Detection of Tea Brewing Samples):
· Predicted Brew Grade: The actual Body/Zing from the brewed sample.
· SOP Compliance: An automated check ensuring that the brewing process adhered to the standardized SOP parameters using sensors.

At step 320 of the method 300, the brewing parameters optimization and recommendation module 210 executed by the one or more hardware processors 102 optimize the one or more brewing parameters comprised in the brewed tea sample by implementing a real-time optimization loop using a Reinforcement Learning (RL) agent, based on the validation.

At step 322 of the method 300, the one or more hardware processors 102 obtain an updated Body Grade and an updated Zing Grade based on the optimization.

At step 324 of the method 300, the one or more hardware processors 102 create one or more new brewing profiles based on the updated Body Grade and the updated Zing Grade.

At step 326 of the method 300, the one or more hardware processors 102 recommend the created one or more new brewing profiles to one or more tea tasters.

At step 328 of the method 300, the one or more hardware processors 102 obtain feedback from the one or more tea tasters for refining the created one or more brewing profiles based on the recommendation.

The step 320 through 328 are explained in detail below:
When the user desires a specific Target Brewing Profile that differs from the baseline, or if the brewed sample's quality is suboptimal, the system engages a real-time optimization loop using Reinforcement Learning (RL) to fine-tune brewing parameters.

User-Defined Target Brewing Profile
· Specify Desired Grades
   · Input: User specifies the desired Body and Zing levels (e.g., VG(TargetBody, TargetZing)).
· Store Target Profile
   · Storage: Record the target internally for subsequent RL calculations.

Initialize Brewing Profiles with Industry Knowledge
- Load Initial Brewing Parameters
   ∘ Industry Standards: Start with brewing parameters based on established industry knowledge.
- Create Initial Brewing Profile
   ∘ Profile Definition: Define an initial brewing profile incorporating industry known parameters.

RL Environment Setup
· Define State Representation: The RL environment defines its state representation clearly through the current brewing parameters and predicted outputs. The state comprises explicitly the following parameters:
   · Current Brewing Parameters:
      - Tea-to-Water Ratio
      - Water Temperature
      - Infusion Time
      - Milk Ratio
      - Other relevant parameters
      - Current Predicted Outputs:
      - Body_Pred
      - Zing_Pred
· Define Actions: The RL agent performs incremental adjustments to brewing parameters within explicitly enforced parameter boundaries to maintain safety, quality, and process stability. The specific incremental actions include adjustments of:
   - Temperature: ±1°C
   - Infusion Time: ±5 seconds
   - Tea-to-Water Ratio: ±0.1 g/100 mL
   - Milk Ratio: Adjust as needed
· Enforce Parameter Boundaries:
   - Safety and Quality Limits: Prevent overshooting extremes (e.g., temperature range 80°C to 95°C, infusion time 2 min to 5 min).
   - Step Sizes: Ensure adjustments are neither too large nor too small to maintain stable learning.
· Establish Reward Function:
   The RL agent utilizes a clearly defined mathematical reward function to guide the optimization. The reward function is expressed as follows: $\begin{matrix}Reward = α ⋅ max \left(0,1-\left|{Body}_{Pred}-{Body}_{Target}\right|\right) \\ + β ⋅ max \left(0,1-\left|{Zing}_{Pred}-{Zing}_{Target}\right|\right) \\ - γ ⋅ ParameterChangeCost\end{matrix}$ where:
   - α, β: Weights balancing the importance of Body and Zing targets, respectively.
   - γ: A penalty coefficient to discourage large or frequent parameter adjustments, ensuring process stability.
   - ParameterChangeCost: The total magnitude of parameter adjustments made per iteration, calculated explicitly based on incremental adjustments.
· Define Transition Mechanism
   · After each action:
      - Automatically brew using the Automated Brewing Module with updated parameters.
      - Invoke Feature 1 (Spectral Image Processing & Valuation Grade (VG) Detection of Tea Brewing Samples) to acquire updated spectral data and obtain new Body_Pred and Zing_Pred.

   · Select RL Algorithm
      · Utilize DL algorithms such as Proximal Policy Optimization (PPO) or Deep Q-Network (DQN).
      · The RL agent iteratively updates its policy by maximizing the cumulative reward received from each brewing cycle until explicitly defined convergence criteria are met.
      · The RL agent aims to maximize cumulative reward over iterative brewing cycles.

Hardware-Assisted Real-Time Adjustments
· Update Brewing Parameters
· The Automated Brewing Module receives updated parameter instructions from the RL agent in real time.
· Maintain Continuous Feedback Loop
· Cycle:
   - Brew → Invoke Feature 1 → Acquire Spectral Data → Predict Body/Zing → Calculate Reward → Update Policy → Brew Again
   - Iterative RL Tuning Protocol

· Set Maximum Iterations and Convergence Criteria
· Maximum Attempts: Limit to 10 brewing attempts to prevent infinite loops.
· Convergence Threshold: The optimization loop concludes explicitly when the difference between predicted, and target grades (Body and Zing) is within an acceptable predefined range.
· Implement Fail-Safe Handling
   · Parameter Validation: Reject any RL actions that attempt to set parameters outside predefined safe ranges.
   · Fallback Mechanism: If unsafe parameters are suggested, override with the nearest safe value.
   ·Halting further RL actions and prompting manual intervention explicitly if the agent persistently recommends extreme or conflicting parameter adjustments.
   Table 1 depicts fail-safe parameters for brewing.

### Example fail-safe parameter ranges include but are not limited to:

**Table 1: Fail-safe parameters for brewing**

| **Parameter** | **Safe Minimum** | **Safe Maximum** | **Unit** |
|---|---|---|---|
| Water Temperature | 80 | 105 | °C |
| Infusion Time | 120 | 300 | seconds |
| Tea-to-Water Ratio | 1.0 | 3.0 | g/100 mL |
| Milk Ratio (if applicable) | 0.0 | 10.0 | % (volume) |

- These thresholds are hard coded into the RL policy boundaries and enforced in real-time to prevent damage to brewing hardware, prevent tea spoilage, and ensure safety.
- Halting further RL actions and prompting manual intervention explicitly if the agent persistently recommends extreme or conflicting parameter adjustments.

### Pseudocode:

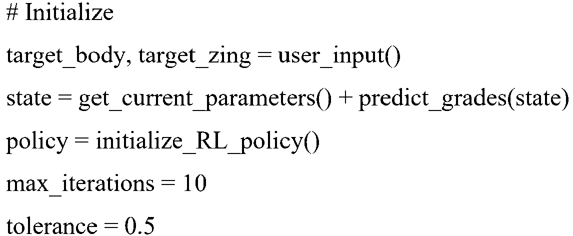

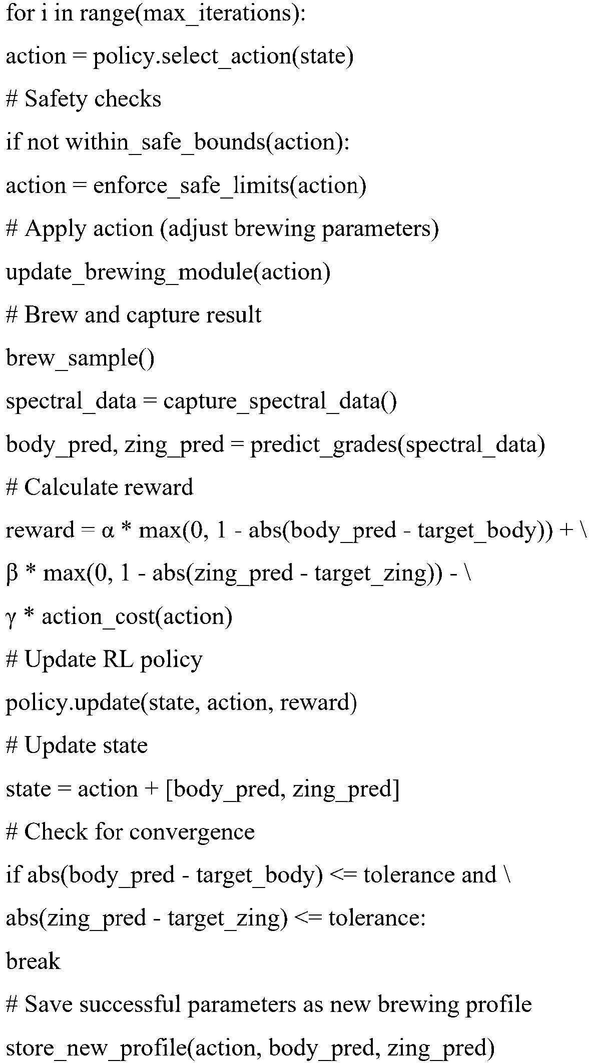

Generate and Store New Brewing Profiles
· Create New Brewing Profiles
   · As RL fine-tunes parameters, compiling successful parameter sets into new brewing profiles.
· Store Brewing Profiles
   · Database: Save each new brewing profile with associated metadata (e.g., target grades, date created).
· Invoke Brewing Profiles Over Time
   · Scheduled Application: Apply stored brewing profiles periodically or as needed based on production requirements.
· Recommend Brewing Profiles to Tea Tasters
   · Recommendation System: Present newly created brewing profiles to tea tasters for validation and approval.
   · Feedback Integration: Incorporate tea tasters' feedback to further refine brewing profiles.

Output of Feature 2 of the present disclosure (Real-Time Brewing Parameter Optimization and Recommendations) :
· Optimized Brewing Parameters: Precisely tuned infusion time, temperature, ratio, etc.
· Final Brew Grade: Updated Body_Pred and Zing_Pred that closely match the target.
· Outcome: Whether the user's target was satisfied.
· New Brewing Profiles: Documented parameter sets created through RL fine-tuning.
· Profile Recommendations: Suggestions for tea tasters to validate and approve new brewing profiles.

At step 330 of the method 300, the one or more hardware processors 102 assess a SOP Compliance by comparing the predicted Body Grade and the predicted Zing Grade with the updated Body Grade and the updated Zing Grade, based on the feedback.

At step 332 of the method 300, the manufacturing process recommendation module 212 executed by the one or more hardware processors 102 generates one or more recommendations to one or more manufacturing process adjustments by integrating at least one of a domain knowledge module including one or more large language models (LLMs) and one or more rule-based algorithms, based on the SOP Compliance assessment. The LLM is trained or prompted using a combination of curated expert rules, historical batch performance data, known correlations between manufacturing parameters and Valuation Grade (VG)s (Body, Zing), and quality feedback from tea tasters.

Input data fed into the LLM includes:
- Historical brewing profiles and their outcomes (VG scores, Body/Zing predictions).
- Manufacturing process parameters such as oxidation time, drying temperature, and rolling intensity used in prior batches.
- Deviation patterns between predicted and target grades across similar sample types.
- Sensory evaluation feedback from human tasters and batch-based labels (e.g., flush, garden, season).
- SOP documentation and compliance logs from prior cycles.

The LLM, when prompted with this structured data, outputs contextual recommendations to adjust factory-level parameters. These include specific, quantifiable actions such as "increase oxidation by 2 minutes" or "decrease drying temperature by 3°C" to realign the product characteristics with the target Body and Zing Grades. The outputs are ranked by expected impact, feasibility, and cross-validated against known historical success patterns. Additionally, a feedback loop is implemented whereby actual results from adjusted manufacturing actions are fed back into the system. This allows the LLM and associated rule-based modules to continuously refine their internal models and improve future recommendations. These recommendations are then logged with batch-specific identifiers and passed to factory operators for human-in-the-loop validation and controlled implementation.

The steps 330 and 332 are explained in detail below:
If the RL-based brewing optimization (Feature 1 and Feature 2) fails to achieve the user's desired Body and Zing Grades, the system generates recommendations for adjustments in the tea manufacturing process based on domain knowledge and insights from a Large Language Model (LLM). This feature ensures that manufacturing parameters are fine-tuned to align the intrinsic qualities of the tea with the target profile. Please note that feature 3 provides actionable recommendations to factory personnel but does not execute actual optimizations within the manufacturing process.

Grade Comparison and SOP Verification
- Compare Predicted Grades with Feature 2 Valuation Grade (VG)
   ∘ Extract Predicted Grades
      ▪ Obtain Body_Pred and Zing_Pred from the CNN model's probability scores.
   ∘ Retrieve Feature 2 Valuation Grade (VG)s
      ▪ Use Body and Zing derived from the brewed sample analysis in Feature 2 (Real-Time Brewing Parameter Optimization and Recommendations),
- SOP Compliance Assessment
   ∘ Evaluate Compliance
      ▪ If Both Body_Pred and Zing_Pred ≥ Threshold:
      ▪ Outcome: SOP has been followed successfully.
      ▪ Action: Confirm adherence; no further adjustments needed.
      ▪ Else:
      ▪ Outcome: SOP may not have been fully adhered to.
      ▪ Action: Indicate potential deviations in SOP parameters and provide recommendations based on the deviations.

Generating Recommendations:
When SOP adherence is confirmed or deviations are detected, the system 100 evaluates the brewed sample against the Target Brewing Profile and provides actionable recommendations if needed.
• Accept Target Brewing Profile
   ∘ Define Target Profile
      ▪ Specify the desired Body and Zing Grades that differ from the Feature 2 Valuation Grade (VG).
• Set Objective
   ∘ Aim to achieve this target through manufacturing process adjustments.
• Evaluate Current Sample Against Target Profile
   ∘ Compare Probability Scores
      ▪ Assess how the current Body_Pred and Zing_Pred align with the Target Brewing Profile.
• Threshold Evaluation
   ∘ If probabilities are below the defined threshold (e.g., 0.90), identify the need for manufacturing adjustments.
• Decision Point
• Determine Action Based on Threshold
   ∘ If Probabilities < Threshold:
      ▪ Action: Initiate Manufacturing Adjustments Subprocess to align with the Target Brewing Profile.
   ∘ Else:
• Action: No adjustments needed; the current sample meets or exceeds the target profile.

Initiate Manufacturing Adjustments Subprocess
Objective: Propose specific changes in manufacturing parameters to move the current sample closer to the Target Brewing Profile using domain knowledge and LLM insights.
i. Body Grade Adjustment
   1. Criteria: Body_Pred < Threshold for Body _Target.
   2. Actions:
      · Oxidation Time Modification
         · Recommendation: "Increase oxidation time by X minutes to enhance Body."
         · Implementation Guidelines:
            · Adjust Oxidation Time: Increase to the specified duration.
            · Expected Impact: Enhanced mouthfeel (Body) of brewed tea.
      · Drying Temperature Adjustment
         · Recommendation: "Increase drying temperature by Y°C to retain more robust flavor compounds."
         · Implementation Guidelines:
            · Adjust Drying Temperature: Increase to the specified degree.
            · Expected Impact: Retention of more robust flavor compounds contributing to Body. · Rolling Technique Enhancement
            · Recommendation: "Increase rolling pressure by Z% to improve flavor compound release."
         · Implementation Guidelines:
            · Adjust Rolling Pressure: Increase to the specified percentage.
            · Expected Impact: Improved release of flavor compounds, enhancing Body.

Zing Grade Adjustment
· Criteria: Zing_Pred < Threshold for Zing_Target.
· Actions:
   · Oxidation Time Modification
      · Recommendation: "Decrease oxidation time by A minutes to preserve Zing."
      · Implementation Guidelines:
         · Adjust Oxidation Time: Decrease to the specified duration.
         · Expected Impact: Preservation of liveliness (Zing) in flavor profile.
· Drying Temperature Adjustment
   · Recommendation: "Decrease drying temperature by B°C to preserve sharp flavor notes."
   · Implementation Guidelines:
      · Adjust Drying Temperature: Decrease to the specified degree.
      · Expected Impact: Retention of volatile compounds responsible for Zing.

· Rolling Technique Adjustment
   · Recommendation: "Adjust rolling duration to C seconds to better preserve flavor vibrancy."
   · Implementation Guidelines:
      · Adjust Rolling Duration: Change to the specified time.
      · Expected Impact: Better preservation of flavor vibrancy, enhancing Zing.

Prioritizing Recommendations
1. Conduct Composite Analysis
   1. Scenario: Both Body and Zing Grades are below the threshold.
2. Develop Adjustment Strategy
   1. Prioritize Adjustments:
      1. Focus on changes that positively influence both Body and Zing.
      2. Balance adjustments to address each deficiency without causing adverse effects.
3. Resolve Conflicts
   1. Example: If increasing oxidation time enhances Body but reduces Zing, find a middle ground or adjust other parameters like drying temperature or rolling technique to influence both attributes positively.

Finalizing Recommendations
1. Implement Balanced Adjustments
   • Make modifications that moderately enhance Body while preserving Zing, or vice versa.
2. Ensure Complementary Changes
   • Ensure that changes contribute to achieving both target grades without conflicting impacts.

Practical Manufacturing Adjustments Link
· Establish Closed-Loop Reporting to Factory
   · Provide Standardized Reports:
      · Format recommendations clearly for factory personnel to implement oxidation, rolling, or drying changes correctly.
   · Track Implementation and Outcomes
      · Monitor Changes:
         · Optionally track whether recommended changes were implemented.
         · Observe subsequent brew results to assess improvements in Body/Zing.
   · Manage Seasonal or Batch Variations
      · Incorporate Batch-Based Tags:
         · Tag each batch with identifiers to correlate quality variations with specific manufacturing conditions or origins.

Finalizing Manufacturing Recommendations
1. Balanced Adjustments:
   1. Implement modifications that moderately enhance Body while preserving Zing, or vice versa.
   2. Ensure that changes contribute to achieving both target grades without conflicting impacts.

Output of Feature 3 of the present disclosure (Factory Process Recommendations to Achieve Targeted Valuation Grade (VG)):
1. Manufacturing Recommendations:
   · Body Grade Deficiency:
      · "Increase oxidation time by X minutes to enhance Body." · Zing Grade Deficiency:
         · "Decrease oxidation time by A minutes to preserve Zing."
         · "Decrease drying temperature by B°C to preserve sharp flavor notes."
         · "Adjust rolling duration to C seconds to better preserve flavor vibrancy."
2. Implementation Guidelines:
   · Oxidation Time Adjustment:
      · Specify the new oxidation time.
      · Expected Impact: Enhanced mouthfeel (Body) of brewed tea.
   · Drying Temperature Adjustment:
      · Specify the new drying temperature.
      · Expected Impact: Preservation of liveliness (Zing) in flavor profile.
   · Rolling Technique Enhancement:
      · Specify the new rolling pressure or duration.
      · Expected Impact: Improved release and preservation of flavor compounds, enhancing both Body and Zing.
3. Prioritized Recommendations:
   · Recommendations are balanced to address both Body and Zing without causing conflicting effects.

To illustrate the one or more recommendations to the one or more manufacturing process adjustments based on the SOP Compliance assessment, consider a scenario where the system 100 targets a high overall Valuation Grade (VG) corresponding to a balanced Body Grade and elevated Zing Grade. After completing the Reinforcement Learning (RL)-based brewing optimization loop, the system 100 attains an outcome that is slightly below the intended quality, where the Body Grade is aligned with the target (body profile remains consistent with expectations), but the Zing Grade remains below the desired level (zing characteristics fall short of the target). Given that the RL optimization could not fully achieve the target Zing Grade, the system 100 automatically invokes the manufacturing adjustment module. Based on previously observed correlations and feedback from the domain knowledge module and large language models (LLMs), the system 100 identifies that low Zing Grade in comparable tea batches are frequently associated with extended oxidation durations and higher-than-optimal drying temperatures. Accordingly, the system 100 recommends the following manufacturing process adjustments: (i) reduce oxidation time by approximately two minutes to preserve volatile compounds responsible for flavor sharpness and vibrancy; (ii) decrease the drying temperature from 105°C to approximately 98°C to retain aroma-enhancing constituents; and (iii) slightly shorten the rolling duration from 300 seconds to 240 seconds to minimize excessive breakdown of delicate flavor compounds. These specific and quantifiable recommendations are provided to the factory personnel for human-in-the-loop validation. Once applied in subsequent batches, the system 100 can reassess the resulting brewed tea sample to verify if the Zing Grade approaches or meets the intended target, thereby ensuring end-to-end alignment between brewing outputs and manufacturing control processes.

The final step involves compiling and presenting the results of the evaluation and any recommended actions.
a. Present Probability Scores
   · Body Grade Probability: Report the probability score indicating the likelihood of meeting/exceeding the Body target.
   · Zing Grade Probability: Report the probability score indicating the likelihood of meeting/exceeding the Zing target.
b. Report SOP Compliance Status
   1. If Grades Meet or Exceed Threshold:
      1. Statement: "SOP has been successfully followed. Brewing quality meets the target profile."
   2. If Grades Do Not Meet Threshold:
      1. Statement: "SOP adherence is questionable. Please check SOP parameters."
c. Detail Manufacturing Recommendations after SOP Parameters are Followed 1. Body Grade Deficiency:
   · "Increase oxidation time by X minutes to enhance Body."
   · "Increase drying temperature by Y°C to retain more robust flavor compounds."
   · "Increase rolling pressure by Z% to improve flavor compound release."

2. Zing Grade Deficiency:
   · "Decrease oxidation time by A minutes to preserve Zing."
   · "Decrease drying temperature by B°C to preserve sharp flavor notes."
   · "Adjust rolling duration to C seconds to better preserve flavor vibrancy."
3. Implementation Guidelines:
   · Oxidation Time Adjustment:
      · Specify the new oxidation time.
      · Expected Impact: Enhanced mouthfeel (Body) of brewed tea.
   · Drying Temperature Adjustment:
      · Specify the new drying temperature.
      · Expected Impact: Preservation liveliness (Zing) in flavor profile.
   · Rolling Technique Enhancement:
      · Specify the new rolling pressure or duration.
      · Expected Impact: Improved release and preservation of flavor compounds, enhancing both Body and Zing.

### Unified Feature Box: Comprehensive System Output

Upon completing each stage (or skipping to the relevant stage if prior success is found), the system presents a single consolidated summary to the user:
· Feature 1 Output
   · Valuation Grade (VG) (Brewing Sample): (Body, Zing)
   · SOP Compliance Check
· Feature 2 Output (if invoked)
   · Optimized Brewing Parameters (temperature, time, ratios) from RL
   · Resulting Brew Grade: (Body _Pred, Zing_Pred)
   · New Brewing Profiles: Documented parameter sets created through RL fine-tuning · Outcome: Whether the user's target was satisfied
· Feature 3 Output (if invoked)
   · Probability Scores: Likelihood of meeting/exceeding Body and Zing targets
   · SOP Compliance Status
   · Recommended Manufacturing Adjustments:
      · Detailed recommendations for Body and/or Zing deficiencies
      · Implementation Guidelines for each recommendation
· Overall System Status
   · Confirm whether the target was achieved by brewing adjustments alone or if manufacturing recommendations were needed
   · Stores all final parameter sets (brewing + manufacturing recommendations) and new brewing profiles for traceability and future reference.
This Feature Box is displayed in a single, cohesive interface, illustrating how each step contributes to the final quality outcome. The entire pipeline is hardware-assisted where applicable, ensuring minimal human intervention once the user sets the desired target. Every stage (imaging, brewing, recommendation generation) integrates feedback loops to continuously refine and enhance tea quality.

The feature box output is rendered through a centralized operator interface/dashboard. This interface allows tea tasters or factory personnel to view brewing iterations, spectral feedback, predicted grades, RL actions taken, and final recommendations in a visual and traceable format. The system 100 operates in real time, with the control engine orchestrating synchronous communication between hardware (brewing module, camera, actuators) and software (modules such as machine learning (ML, e.g., CNN for spectral feature extraction and anomaly detection), reinforcement learning (RL, e.g., Proximal Policy Optimization or Deep Q-Network for adaptive brewing parameter tuning), and large language models (LLM, e.g., Bidirectional Encoder Representations from Transformers (BERT), Large Language Model Meta AI (LLAMA) 3.1 or similar models trained on domain-specific tea manufacturing knowledge). This integrated communication ensures minimal latency between brewing, imaging, decision-making, and feedback. Additionally, the reinforcement learning (RL) optimization framework described in previous paragraphs is not strictly limited to optimizing Valuation Grade (VG)s (Body and Zing).

The system 100 is also explicitly designed to support broader or alternative objectives related to the brewing and manufacturing processes. For example, the RL-based optimization can generate brewing profiles specifically aimed at standardizing tea flavor profiles across varying raw tea batches sourced from different gardens, flushes, or seasonal harvests. This ensures a consistent sensory experience and product quality, even when raw tea characteristics vary significantly due to environmental or agricultural conditions. Another important objective enabled by the RL framework is the creation of brewing profiles that target specific sensory attributes, such as reducing bitterness, enhancing sweetness, emphasizing floral or fruity notes, minimizing astringency, or achieving a certain mouthfeel as specified by consumer preference or market demand. To support this, the CNN and RL modules are designed with configurable sensory target inputs, allowing the user or system to dynamically define the objective functions for optimization-either through pre-set templates or custom definitions depending on the beverage type, market demand, or seasonal preferences. This dynamic targeting capability enables rapid adaptation and transferability of the system to other use cases beyond tea, while still preserving accuracy and robustness in sensory prediction. Moreover, the brewing process itself is managed as a real-time multi-stage control sequence, wherein infusion, steeping, ingredient additions (e.g., milk or flavor infusions), or temperature ramps can be adjusted stage-wise based on continuous feedback from intermediate sensory predictions. This stage-wise control enables the system to refine brewing outcomes mid-process, rather than waiting for final output, further improving accuracy, reducing waste, and enabling complex recipes to be implemented in industrial environments.

Additionally, the system 100 provides comprehensive compliance monitoring, automatically verifying adherence to regulatory and quality control standards (e.g., International Organization for Standardization (ISO), Hazard Analysis and Critical Control Points (HACCP)) by continuously logging sensor data, brewing parameters, and quality metrics. This compliance monitoring is enhanced by a robust raw input traceability mechanism, which systematically records the origin metadata of tea leaves (e.g., garden, flush, harvest conditions), enabling full transparency from raw material to finish product. Furthermore, the system integrates preference learning capabilities by continuously capturing and analyzing user feedback or market responses through interactive dashboards, allowing the RL module to autonomously refine sensory objectives and optimize recipes over time.

Furthermore, while the embodiments described herein primarily focus on tea brewing and manufacturing processes, the disclosed methods and systems possess clear and significant applicability in other beverage industries, such as coffee, beer brewing, wine production, and spirits distillation. For instance, in coffee production, spectral imaging combined with CNN-based feature extraction and RL-driven parameter optimization can be similarly employed to achieve consistency in brewed coffee's sensory profiles despite variability in bean origin or roasting level. In the beer industry, analogous methods can be applied to maintain consistent taste profiles and optimize brewing parameters such as hop utilization, malt extraction, and fermentation conditions, thus enhancing product uniformity and consumer satisfaction. Likewise, for wine or spirits manufacturing, the methods described can enable precise adjustments of production processes (fermentation parameters, aging duration, blending ratios) based on real-time sensory predictions derived from spectral data analysis and ML integration. Thus, the disclosed system and method provide a robust, adaptable technological framework capable of addressing widespread industry challenges regarding consistency, quality optimization, and sensory-standardization across multiple beverage sectors.

The disclosed system 100 further integrates real-time predictive maintenance and adaptive calibration modules, leveraging historical data and continuous spectral anomaly detection from hardware components such as spectral imaging cameras, brewing actuators, sensors, and processing units. Specifically, the system employs machine learning algorithms to analyze ongoing operational data such as deviations in reflectance values, camera exposure anomalies, or actuator inconsistencies to proactively identify signs of sensor drift, wear, or potential equipment malfunction before they negatively affect spectral predictions or tea brewing consistency. Once a potential issue is detected, the system automatically issues actionable alerts or recommendations for timely maintenance, recalibration, or component replacement. These predictive alerts and calibration adjustments are logged systematically along with timestamps, hardware IDs, and operational parameters to maintain traceability and audit readiness. This feature notably reduces unscheduled downtime, enhances operational efficiency, and maintains optimal quality output across extended periods of continuous industrial operation. Moreover, the system architecture is explicitly designed for hardware evolution and scalability. As sensor technology (e.g., spectral cameras, environmental sensors) or brewing hardware (e.g., infusion units, automation controllers) advances, the system's modular structure enables seamless integration of newer, higher-resolution, or faster-response hardware components without significant architectural changes. Adaptive algorithms within the ML and RL modules autonomously recalibrate to new hardware specifications, ensuring consistent performance and accuracy despite technological upgrades or changes in hardware providers.

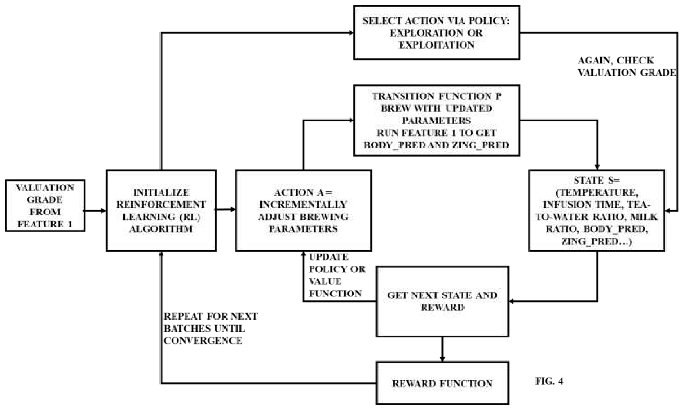

FIG. 4 is a block diagram illustrating a real-time brewing parameters optimization and recommendations, in conjunction with the method for optimization of tea brewing profiles and factory processes using spectral imaging, according to some embodiments of the present disclosure. The details for the real-time brewing parameter optimization and recommendations are explained in the previous sections.

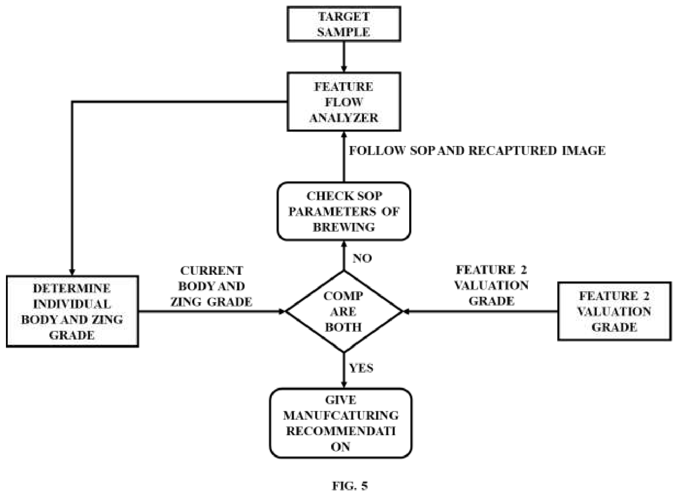

FIG. 5 is a block diagram illustrating manufacturing factory process recommendations to achieve targeted Valuation Grade (VG), in conjunction with the method for optimization of tea brewing profiles and factory processes using spectral imaging, according to some embodiments of the present disclosure. The details for the manufacturing factory process recommendations to achieve the targeted Valuation Grade (VG) are explained in the previous sections.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

Traditional reliance on tea tasters introduces subjectivity and inconsistency in grading, as evaluations can vary based on individual experience, fatigue, or bias. Furthermore, conventional methods lack adaptability to variations in raw material characteristics, growing conditions, or processing techniques, which can lead to inconsistent results. Additionally, traditional processes lack robust traceability and logging, making it challenging to monitor and replicate successful outcomes or identify sources of deviation. The present disclosure addresses the above-mentioned issues by proposing an end-to-end automated system for brewed tea evaluation and optimization, focusing on sensory attributes such as Body and Zing. The system 100 integrates hardware automation, spectral imaging, and machine learning techniques into a unified pipeline. It employs ROI-based segmentation using neural networks and domain-specific preprocessing steps. Unlike prior art, which applies static segmentation methods or evaluates dry tea samples, the system 100 of the present disclosure is tailored for brewed tea analysis. The system 100 identifies homogeneous regions within liquid samples, addressing challenges such as reflections and uneven compositions. This segmentation process overlays the ROI onto raw spectral data to combine spatial and spectral features for analysis. Additionally, the inclusion of a spectral attenuation layer in the CNN highlights relevant spectral features for precise sensory grade predictions. The system 100 and the method of the present disclosure uses reinforcement learning (RL) to dynamically adjust brewing parameters like infusion time and temperature in real-time. This overcomes the rigidity of static optimization models that cannot adapt to variations in raw materials or sensory targets. The system 100 and the method of the present disclosure bridge the gap between brewed tea evaluation and manufacturing by providing actionable recommendations for process adjustments (e.g., oxidation, rolling, drying).

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300), comprising:
collecting (302), a brewed tea sample from one or more sections of a production batch in a tea factory via one or more hardware processors, wherein the brewed tea sample is formulated with a liquor containing water;
acquiring (304) by a spectral camera under controlled illumination via the one or more hardware processors, one or more spectral images of the brewed tea sample, wherein the spectral camera captures the one or more spectral images over a predetermined wavelength range to generate a multi-dimensional spectral hypercube;
preprocessing (306), via the one or more hardware processors, the generated spectral hypercube to isolate one or more regions of interests in a polygon format for subsequent spectral analysis by,
(i) downsampling the generated spectral hypercube to obtain a one-band spectral image or three-band spectral image, wherein the one-band spectral image or the three-band spectral image is automatically selected using one or more dimension reduction algorithms for optimal contrast identification;
(ii) converting the downsampled one-band spectral image or the three-band spectral image to a grayscale to reduce colour complexity and to improve intensity variations;
(iii) applying a Gaussian blur on the grayscaled one-band spectral image or the three-band spectral image to smoothen random noise and soften one or more sharp edges;
(iv) performing histogram equalization on the blurred one-band spectral image or the three-band spectral image to obtain improved contrast of distinguishable spectral features; and
(v) isolating the one or more regions of interests in the polygon format for subsequent spectral analysis;
performing (308), via the one or more hardware processors, segmentation on the isolated one or more regions of interests corresponding to the brewed tea sample and wherein, a polygon mask is created on each candidate region of interests;
superimposing (310), via the one or more hardware processors, the created polygonal mask onto the generated spectral hypercube to retain only the isolated one or more regions of interests for further analysis;
extracting (312), via the one or more hardware processors, a plurality of features from the superimposed one or more regions of interests using a multi-band Convolutional Neural Network (CNN) classification model with a Spectral Attenuation Layer, wherein the extraction of each of the plurality of features pass leverages a spectral reflectance data corresponding to the one-band spectral image or the three-band spectral image;
predicting (314), via the one or more hardware processors, a Body Grade and a Zing Grade based on the extracted plurality of features;
determining (316), via the one or more hardware processors, a Valuation Grade (VG) based on the predicted Body Grade and the predicted Zing Grade;
validating (318), via the one or more hardware processors, (i) the determined VG against a pre-defined baseline VG; and (ii) one or more brewing parameters comprised in the brewed tea sample against one or more reference brewing parameters;
optimizing (320), via the one or more hardware processors, the one or more brewing parameters comprised in the brewed tea sample by implementing a real-time optimization loop using a Reinforcement Learning (RL) agent, based on the validation;
obtaining (322), via the one or more hardware processors, an updated Body Grade and an updated Zing Grade, based on the optimization;
creating (324), via the one or more hardware processors, one or more new brewing profiles based on the updated Body Grade and the updated Zing Grade;
recommending (326), via the one or more hardware processors, the created one or more new brewing profiles to one or more tea tasters;
obtaining (328), via the one or more hardware processors, feedback from the one or more tea tasters for refining the created one or more brewing profiles based on the recommendation;
assessing (330), via the one or more hardware processors, a Standard operating procedure (SOP) Compliance by comparing the predicted Body Grade and the predicted Zing Grade with the updated Body Grade and the updated Zing Grade, based on the feedback; and
generating (332), via the one or more hardware processors, one or more recommendations to one or more manufacturing process adjustments by integrating at least one of a domain knowledge module including one or more large language models (LLMs) and one or more rule-based algorithms, based on the SOP Compliance assessment.

2. The processor implemented method as claimed in claim 1, wherein a plurality of anomalies comprising a spectral anomaly, a visual anomaly and a physical anomaly are detected from the the one-band spectral image or the three-band spectral image and wherein the spectral anomaly detects one or more deviations with the spectral reflectance data attributable to one or more heavy metal contaminations, the visual anomaly detects at least one physical contaminants discrepancy, and the physical anomaly validates a plurality of morphological features in comparison with one or more factory provided grade standards.

3. The processor implemented method as claimed in claim 1, wherein the optimization of the one or more brewing parameters by implementing the real-time optimization loop using the Reinforcement Learning (RL) agent comprises iteratively performing the following steps until a pre-defined convergence criterion is met:
(i) defining a state representation using the one or more brewing parameters and the predicted Body Grade and the predicted Zing Grade;
(ii) defining one or more actions for the defined state representation by incrementally adjusting the one or more brewing parameters and enforcing a plurality of parameter boundaries to maintain safety and quality limits;
(iii) brewing with the adjusted one or more brewing parameters and invoking the prediction (314) step to acquire updated spectral reflectance data for a newly predicted Body Grade and a newly predicted Zing Grade;
(iv) establishing a reward function to guide the RL agent toward aligning the newly predicted Body Grade and the newly predicted Zing Grade with a predefined target Valuation Grade (VG); and
(v) incorporating a failsafe mechanism which involves,
(i) rejecting the one or more actions of the RL agent which attempts adjusting the one or more brewing parameters outside a predefined one or more safe threshold values;
(ii) overriding the one or more actions of the RL agent which attempts adjusting the one or more brewing parameters outside the predefined one or more safe threshold values with the nearest permissible one or more safe threshold values; and
(iii) halting the one or more actions of the RL agent if at least one of an extreme or a conflicting adjustment of the one or more brewing parameters persists, prompting a manual review.

4. The processor implemented method as claimed in claim 1, wherein the one or more recommendations to the one or more manufacturing process adjustments based on the SOP Compliance assessment comprises:
(i) recommending a Body Grade adjustment including an oxidation time modification, a drying temperature adjustment and a rolling technique enhancement, based on a comparison of the updated Body Grade with a predefined threshold for a target Body Grade; and
(ii) recommending a Zing Grade adjustment including the oxidation time modification, the drying temperature adjustment and the rolling technique enhancement, if based on a comparison of the updated Zing Grade with a predefined threshold for a target Zing Grade.

5. The processor implemented method as claimed in claim 1, wherein the multi-band CNN classification model is configured to receive a multi-dimensional spectral image from the brewed tea sample.

6. The processor implemented method as claimed in claim 1, wherein the Spectral Attenuation Layer is trained for:
(i) assigning learned one or more attenuation coefficients to an individual or grouped wavelength bands according to one or more chemical attributes and one or more physical attributes affecting a body and a zing of the brewed tea sample based on an associated relevance;
(ii) enhancing signals linked to a flavour, a viscosity, and a sharpness of the brewed tea sample based on one or more weights being assigned to one or more relevant wavelength regions;
(iii) filtering out or down-weighting noise bands to reduce interference from irrelevant reflectance regions and potential contaminants; and
(iv)improving the grade prediction accuracy of the multi-band CNN classification model by updating the multi-band CNN classification model using a labelled tea sample data such that the Spectral Attenuation Layer optimally distinguishes the spectral reflectance data correlating to a body and a zing from at least one of a noise or one or more contamination artifacts, thereby outperforming one or more CNN models that lack adaptive spectral weighting.

7. The processor implemented method as claimed in claim 1, wherein integrating the domain knowledge module including the one or more large language models (LLMs) and the one or more rule-based algorithms comprises:
(i) receiving and analysing a historical brewing data, one or more manufacturing process parameters, and a quality measurement data from one or more previous production batches of the tea factory;
(ii) deriving one or more correlations between one or more deviations between the updated Body Grade and updated Zing Grade, and the corresponding predefined thresholds associated with the one or more manufacturing process parameters, based on the analysed historical brewing data and the quality measurement data;
(iii) assigning a weighted importance to the one or more manufacturing process parameters based on the derived one or more correlations in conjunction with at least one of one or more historical trends, a raw material variability, and one or more operational constraints;
(iv) obtaining feedback for the brewed tea sample regarding an effectiveness of the one or more manufacturing process parameters in achieving the target Body Grade and target Zing Grade; and
(v) incorporating and continuously refining the obtained feedback using the domain knowledge module to update the one or more correlations and the weighted importance assigned to the one or more manufacturing process parameters.

8. A system (100), comprising:
a memory (104) storing instructions;
one or more communication interfaces (112); and
one or more hardware processors (102) coupled to the memory (104) via the one or more communication interfaces (112), wherein the one or more hardware processors (102) are configured by the instructions to:
collect a brewed tea sample from one or more sections of a production batch in a tea factory, wherein the infusion-based beverage samples such as brewed tea sample is formulated with a liquor containing water;
acquire, by a spectral camera under controlled illumination, one or more spectral images of the brewed tea sample, wherein the spectral camera captures the one or more spectral images over a predetermined wavelength range to generate a multi-dimensional spectral hypercube;
preprocessing the generated spectral hypercube to isolate one or more regions of interests in a polygon format for subsequent spectral analysis by,
(i) downsampling the generated spectral hypercube to obtain a one-band spectral image or three-band spectral image, wherein the one-band spectral image or the three-band spectral image is automatically selected using one or more dimension reduction algorithms for optimal contrast identification;
(ii) converting the downsampled one-band spectral image or the three-band spectral image to a grayscale to reduce to reduce colour complexity and to improve intensity variations;
(iii) applying a Gaussian blur on the grayscaled one-band spectral image or the three-band spectral image to smoothen random noise and soften one or more sharp edges;
(iv) performing histogram equalization on the blurred one-band spectral image or the three-band spectral image to obtain improved contrast of distinguishable spectral features; and
(v) isolating the one or more regions of interests in the polygon format for subsequent spectral analysis;
perform segmentation on the isolated one or more regions of interests corresponding to the brewed tea sample, and wherein a polygon mask is created on each candidate region of interests;
superimpose the created polygonal mask onto the generated spectral hypercube to retain only the isolated regions of interests for further analysis;
extract a plurality of features from the superimposed one or more regions of interests using a multi-band CNN classification model with a Spectral Attenuation Layer, wherein the extraction of each of the plurality of features pass leverages a spectral reflectance data corresponding to the one-band spectral image or the three-band spectral image;
predict a Body Grade and a Zing Grade based on the extracted plurality of features;
determine a Valuation Grade (VG) based on the predicted Body Grade and the predicted Zing Grade;
validate, (i) the determined VG against a pre-defined baseline VG; and (ii) one or more brewing parameters comprised in the brewed tea sample against one or more reference brewing parameters;
optimize the one or more brewing parameters comprised in the brewed tea sample by implementing a real-time optimization loop using a Reinforcement Learning (RL) agent, based on the validation;
obtain an updated Body Grade and an updated Zing Grade based on the optimization;
create one or more new brewing profiles based on the updated Body Grade and the updated Zing Grade;
recommend the created one or more new brewing profiles to one or more tea tasters; obtain feedback from the one or more tea tasters for refining the created one or more brewing profiles based on the recommendation;
assess a SOP Compliance by comparing the predicted Body Grade and the predicted Zing Grade with the updated Body Grade and the updated Zing Grade, based on the feedback; and
generate one or more recommendations to one or more manufacturing process adjustments by integrating at least one of a domain knowledge module including one or more large language models (LLMs) and one or more rule-based algorithms, based on the SOP Compliance assessment.

9. The system as claimed in claim 8, wherein a plurality of anomalies comprising a spectral anomaly, a visual anomaly and a physical anomaly are detected from the the one-band spectral image or the three-band spectral image and wherein the spectral anomaly detects one or more deviations with a spectral reflectance data attributable to one or more heavy metal contaminations, the visual anomaly detects at least one physical contaminants discrepancy, and the physical anomaly validates a plurality of morphological features in comparison with one or more factory provided grade standards.

10. The system as claimed in claim 8, wherein the optimization of the one or more brewing parameters by implementing the real-time optimization loop using the Reinforcement Learning (RL) agent comprises iteratively performing the following steps until a pre-defined convergence criterion is met:
(i) defining a state representation using the one or more brewing parameters and the predicted Body Grade and the predicted Zing Grade;
(ii) defining one or more actions for the defined state representation by incrementally adjusting the one or more brewing parameters and enforcing a plurality of parameter boundaries to maintain safety and quality limits;
(iii) brewing with the adjusted one or more brewing parameters and invoking the prediction (314) step to acquire updated spectral reflectance data for a newly predicted Body Grade and a newly predicted Zing Grade;
(iv)establishing a reward function to guide the RL agent toward aligning the newly predicted Body Grade and the newly predicted Zing Grade with a predefined target Valuation Grade (VG); and
(v) incorporating a failsafe mechanism which involves,
(i) state representation the one or more actions of the RL agent which attempts adjusting the one or more brewing parameters outside a predefined one or more safe threshold values;
(ii) overriding the one or more actions of the RL agent which attempts adjusting the one or more brewing parameters outside the predefined one or more safe threshold values with the nearest permissible one or more safe threshold values; and
(iii) halting the one or more actions of the RL agent if at least one of an extreme or a conflicting adjustment of the one or more brewing parameters persists, prompting a manual review.

11. The system as claimed in claim 8, wherein the one or more recommendations to one or more manufacturing process adjustments based on the SOP Compliance assessment comprises:
(i) recommending a Body Grade adjustment including an oxidation time modification, a drying temperature adjustment and a rolling technique enhancement, based on a comparison of the updated Body Grade with a predefined threshold for a target Body Grade; and
(ii) recommending a Zing Grade adjustment including the oxidation time modification, the drying temperature adjustment and the rolling technique enhancement, if based on a comparison of the updated Zing Grade with a predefined threshold for a target Zing Grade.

12. The system as claimed in claim 8, wherein the multi-band CNN classification model is configured to receive a multi-dimensional spectral image from the brewed tea sample.

13. The system as claimed in claim 8, wherein the Spectral Attenuation Layer is trained for:
(i) assigning learned one or more attenuation coefficients to an individual or grouped wavelength bands according to one or more chemical attributes and one or more physical attributes affecting a body and a zing of the brewed tea sample based on an associated relevance;
(ii) enhancing signals linked to a flavour, a viscosity, and a sharpness of the brewed tea sample based on one or more weights being assigned to one or more relevant wavelength regions;
(iii) filtering out or down-weighting noise bands to reduce interference from irrelevant reflectance regions and potential contaminants; and
(iv) improving the grade prediction accuracy of the multi-band CNN classification model by updating the multi-band CNN classification model using a labelled tea sample data such that the Spectral Attenuation Layer optimally distinguishes the spectral reflectance data correlating to a body and a zing from at least one of a noise or one or more contamination artifacts, thereby outperforming one or more CNN models that lack adaptive spectral weighting.

14. The system as claimed in claim 8, wherein integrating the domain knowledge module including the one or more large language models (LLMs) and the one or more rule-based algorithms comprises:
(i) receiving and analysing a historical brewing data, one or more manufacturing process parameters, and a quality measurement data from previous production batches of the tea factory;
(ii) deriving one or more correlations between one or more deviations between the updated Body Grade and updated Zing Grade, and the corresponding predefined thresholds associated with the one or more manufacturing process parameters, based on the analysed historical brewing data and the quality measurement data;
(iii) assigning a weighted importance to the one or more manufacturing process parameters based on the derived one or more correlations in conjunction with at least one of one or more historical trends, a raw material variability, and one or more operational constraints;
(iv) obtaining feedback for the brewed tea sample regarding an effectiveness of the one or more manufacturing process parameters in achieving the target Body Grade and target Zing Grade; and
(v) incorporating and continuously refining the obtained feedback using the domain knowledge module to update the one or more correlations and the weighted importance assigned to the one or more manufacturing process parameters.

15. One or more non-transitory machine-readable information storage mediums comprising one or more instructions which when executed by one or more hardware processors cause:
collecting a brewed tea sample from one or more sections of a production batch in a tea factory, wherein the brewed tea sample is formulated with a liquor containing water;
acquiring by a spectral camera under controlled illumination, one or more spectral images of the brewed tea sample, wherein the spectral camera captures the one or more spectral images over a predetermined wavelength range to generate a multi-dimensional spectral hypercube;
preprocessing the generated spectral hypercube to isolate one or more regions of interests in a polygon format for subsequent spectral analysis by,
(i) downsampling the generated spectral hypercube to obtain a one-band spectral image or three-band spectral image, wherein the one-band spectral image or the three-band spectral image is automatically selected using one or more dimension reduction algorithms for optimal contrast identification;
(ii) converting the downsampled one-band spectral image or the three-band spectral image to a grayscale to reduce colour complexity and to improve intensity variations;
(iii) applying a Gaussian blur on the grayscaled one-band spectral image or the three-band spectral image to smoothen random noise and soften one or more sharp edges;
(iv) performing histogram equalization on the blurred one-band spectral image or the three-band spectral image to obtain improved contrast of distinguishable spectral features; and
(v) isolating the one or more regions of interests in the polygon format for subsequent spectral analysis;
performing segmentation on the isolated one or more regions of interests corresponding to the brewed tea sample and wherein, a polygon mask is created on each candidate region of interests;
superimposing the created polygonal mask onto the generated spectral hypercube to retain only the isolated one or more regions of interests for further analysis;
extracting a plurality of features from the superimposed one or more regions of interests using a multi-band Convolutional Neural Network (CNN) classification model with a Spectral Attenuation Layer, wherein the extraction of each of the plurality of features pass leverages a spectral reflectance data corresponding to the one-band spectral image or the three-band spectral image;
predicting a Body Grade and a Zing Grade based on the extracted plurality of features;
determining a Valuation Grade (VG) based on the predicted Body Grade and the predicted Zing Grade;
validating (i) the determined VG against a pre-defined baseline VG; and (ii) one or more brewing parameters comprised in the brewed tea sample against one or more reference brewing parameters;
optimizing the one or more brewing parameters comprised in the brewed tea sample by implementing a real-time optimization loop using a Reinforcement Learning (RL) agent, based on the validation;
obtaining an updated Body Grade and an updated Zing Grade, based on the optimization;
creating one or more new brewing profiles based on the updated Body Grade and the updated Zing Grade;
recommending the created one or more new brewing profiles to one or more tea tasters;
obtaining feedback from the one or more tea tasters for refining the created one or more brewing profiles based on the recommendation;
assessing a Standard operating procedure (SOP) Compliance by comparing the predicted Body Grade and the predicted Zing Grade with the updated Body Grade and the updated Zing Grade, based on the feedback; and
generating one or more recommendations to one or more manufacturing process adjustments by integrating at least one of a domain knowledge module including one or more large language models (LLMs) and one or more rule-based algorithms, based on the SOP Compliance assessment.
